# EUROPÄISCHE PATENTSCHRIFT

(11) **EP 2 352 616 B1**
(45) Veröffentlichungstag und Bekanntmachung des Hinweises auf die Patenterteilung: **09.03.2016**
(21) Anmeldenummer: 09804115.5
(22) Anmeldetag: 26.11.2009
(51) Int. Cl.: B23K 20/10, C03C 27/02

(54) **VERFAHREN UND VORRICHTUNG ZUM KRAFTSCHLÜSSIGEN VERBINDEN VON GLASARTIGEN BAUTEILEN MIT METALLEN**
METHOD AND DEVICE FOR FORCE-FIT CONNECTING GLASS-LIKE COMPONENTS TO METALS
PROCÉDÉ ET DISPOSITIF POUR ASSEMBLER À FORCE DES COMPOSANTS VITREUX ET DES MÉTAUX

(30) Priorität: 03.12.2008 DE 102008060301
(43) Veröffentlichungstag der Anmeldung: 10.08.2011
(73) Patentinhaber: Grenzebach Maschinenbau GmbH, 86663 Asbach-Bäumenheim (DE)
(72) Erfinder: FRIEDL, Wolfgang, 86687 Kaisheim (DE); WENNINGER, Egbert, 86641 Rain (DE); LEITENMEIER, Stephan, 86156 Augsburg (DE); BACHMEIR, Franz, 86674 Baar (DE)
(74) Vertreter: Kindermann, Peter
(86) Internationale Anmeldenummer: PCT/DE2009/001678
(87) Internationale Veröffentlichungsnummer: WO 2010/063262

(56) Entgegenhaltungen:
- DE-A1- 19 546 997
- ROEDER E ET AL: "NEUE WERKSTOFFVERBUNDE DURCH ULTRASCHALLSCHWEISSEN" TECHNOLOGIE UND MANAGEMENT, EXPERPRESS-VERLAG, BERLIN, DE, Bd. 44, Nr. 1, 1. Januar 1995 (1995-01-01) , Seiten 31-37,39, XP008011382 ISSN: 0932-2558

## Beschreibung

Die Erfindung betrifft ein Verfahren und eine Vorrichtung zum kraftschlüssigen Verbinden von glasartigen Bauteilen, wie zum Beispiel Keramikflächen, mit Metallen, insbesondere Glasplatten mit Aluminium sowie ein Computerprogramm und einen maschinenlesbaren Träger zur Durchführung des Verfahrens. Zum Stand der Technik werden die folgenden Druckschriften genannt.

Aus der deutschen Patentschrift DE 23 12 724 C ist ein Verfahren zum Ultraschallschweißen eines aus Metall bestehenden Bauteils mit einem aus einem Nichtmetall gebildeten Bauteil unter Einfügung einer metallischen Zwischenlage bekannt.

Als Beispiel für diesen Stand der Technik wird in dieser Druckschrift ausgegangen von einer Keramik-Edelmetall-Aluminium-Stahl-Verbindung die in bekannter Weise durch das Aufsetzen einer Sonotrode eines Ultraschall-Schweißgeräts auf das Stahlteil verschweißt wird. Je nach Art des Materials rund der Abmessungen des nichtmetallischen Bauteils kann es hierbei vorkommen, dass dieses Bauteil gegen die beim Ultraschallschweißen auftretende Belastung nicht hinreichend widerstandsfähig ist, was sich durch Haarrisse und Brüche äußern kann. Als nichtmetallisches Bauteil wird in dieser Druckschrift ein piezokeramisches Plättchen, aber auch ein Quarz- oder Glasscheibchen angeführt.

Um die oben beschriebenen Nachteile zu vermeiden wird zunächst auf die gegenseitigen Verbindungsflächen des Metallteiles und des Nichtmetallteiles eine Aluminiumschicht oder eine Aluminiumfolie aufgebracht, dann das nichtmetallische Bauteil festgelegt und die mit Aluminium beschichteten Verbindungsflächen aufeinander gelegt und auf eine Temperatur von mindestens 250°C, vorzugsweise 350°C, vorgewärmt. Letztlich werden dann diese vorgewärmten Teile durch Ultraschallschweißen miteinander verbunden. Für den Vorgang einer kraftschlüssigen Verbindung einer Glasfläche mit einem großflächigen Verbindungselement bietet die Patentschrift DE 23 12 724 C keinen Hinweis.

Aus der DE 195 46 997 C2 ist ein weiteres Verfahren zum Verbinden von metallischen Teilen mit nichtmetallischen Teilen bekannt. Als vorbekannte Verfahren werden hier das Fügen von Glas bzw. Glaskeramik und Reinaluminium mit Ultraschall genannt. Die zum Schweißen benötigte Energie wird dabei in Form von mechanischen Schwingungen eines Resonators, der Sonotrode, unter der Wirkung einer geringen statischen Anpreßkraft als Scherwellen in das Schweißgut eingebracht. Des Weiteren wird zum Stand der Technik ein aus der DE 44 06 220 A1 bekanntes Fügeverfahren zum Verbinden von Metallen und Keramiken durch hochfrequente Felder angeführt.

Die dort beschriebene Erfindung soll ein einfaches Verfahren zum Verbinden von metallischen Teilen mit nichtmetallischen Teilen aufzeigen, das insbesondere auch qualitativ hochwertige Verbindungen von Teilen aus Aluminium mit Teilen aus Glas oder Keramik ermöglicht. Hierzu wird in der DE 195 46 997 C2 ein Verfahren zum Verbinden von metallischen Teilen mit nichtmetallischen Teilen, insbesondere von Teilen aus Aluminium oder Kupfer mit Teilen aus Glas oder Keramik, offenbart, bei dem durch Vibrationsschweißen mit einer Vibrationsbewegung durch konstant rotierende Schwingungen die Verbindung geschaffen wird. Hierbei erfolgen die konstant rotierenden Schwingungen in Form in sich geschlossener und für alle Punkte innerhalb der Schweißfläche identischer Schwingungsbahnen, zugleich senkrecht zur Schweißfläche wirkender Anpreßkraft sowie anschließendem Halten ohne rotierende Schwingungen.

Aus der DE 198 33 590 C1 ist ferner ein Verfahren zur Verschweißung eines ausgedehnten optischen Bauteils an eine Metallbefestigung, deren Verwendung sowie die optische Baugruppe, bekannt um die Ultraschallschweißung von optischen Bauteilen an Metallbefestigungen auch für ausgedehnte optische Bauteile verfügbar zu machen, insbesondere, wenn diese aufgrund ihrer hohen Empfindlichkeit und/oder hohen optischen Qualität nur geringsten Belastungen ausgesetzt werden dürfen.

Hierzu wird ein Verfahren zur Verschweißung eines ausgedehnten optischen Bauteils an einer Metallbefestigung offenbart, worin das transparente optische Bauteil zumindest an seinem Rand allgemein gegenüberliegend und benachbart einer vorgesehenen Befestigungsstelle vibrationsdämpfend gehalten wird und worin die Metallbefestigung auf die vorgesehene Befestigungsstelle am Rand des ausgedehnten optischen Bereichs aufgesetzt wird. Ferner wird die Sonotrode auf die Befestigung unter Ausübung allenfalls geringer Biegemomente aufgesetzt und die Ultraschallschweißung durchgeführt. Anregungen zur Schaffung einer großflächigen belastungsfähigen Halterung sind auch diesen letzten Druckschriften nicht zu entnehmen.

Eine weitere Druckschrift ist: ROEDER E ET AL: "Neue Werkstoffverbunde durch Ultraschallschweissen", in: Technologie und Management, Experpress-Verlag, Berlin, DE, BD.44, Nr.1 (1995-01-01), Seiten 31-37,39, XP008011382 ISSN: 0932-2558.

Aus der WO 2008/ 031 823 A1 ist zuletzt ein Verfahren zur Qualitätsüberwachung beim Ultraschallschweißen bekannt.

Zum Stand der Technik wird hier die WO 2004/ 096 480 A1 genannt, bei der das Regeln zeitabhängiger Schweißparamter beim Verschweißen von Draht - Litzen an Sollwerte angepasst wird.

Weiter wird hier auf die DE 44 29 684 A1 Bezug genommen, bei der beim Verschweißen elektrischer Leiter charakteristische Parameter an ein in der Breite konstantes Toleranzband angepasst werden.

Bei der weiter zitierten DE 101 10 048 A1 werden in einem Verfahren zum Prüfen von durch Ultraschall-Drahtbonden hergestellten Verbindungen mittels der Überwachung von Master-Werten Rückschlüsse auf die Festigkeit der Verbindung ermöglicht.

Ferner wird das Ultraschallschweißen von Kunststoffteilen im Stand der Technik behandelt (DE 43 21 874 A1, EP 0 567 426 B1, WO 02/ 098 636 A1). Am Rande wird zu diesem Thema noch auf die WO 98/ 49 009, die US 5 855 706 A, die US 5 658 408 A und die US 5 435 863 A hingewiesen.

Ausgehend von diesem Stand der Technik soll nach der WO 2008/ 031 823 A1 ein derartiges Verfahren so weitergebildet werden, dass im Vergleich zu dem Stand der Technik ein feinfühligeres Überwachen von Prozessvorgängen ermöglicht wird, um entsprechend Parameterveränderungen vornehmen zu können, die zu Schweißergebnissen höherer Güte führen bzw. eine Anpassung an Prozessbedingungen ermöglichen, die sicherstellt, dass im erforderlichen Umfang Gutschweißungen erzielbar sind. Dabei soll ein problemloser Einsatz bei der Serienfertigung möglich sein.

Hierzu wird in der WO 2008/ 031 823 A1 ein Verfahren zur Qualitätssicherung beim Ultraschallschweißen offenbart, bei dem aus zumindest einem den Schweißprozess beeinflussenden und/oder Güte des Schweißprozesses repräsentierenden Parameter zuzuordnenden Messwerten aus durchgeführten Schweißungen eine Messwerttoleranzband bestimmt wird, wobei Messwerte, die nachfolgenden weiteren Schweißungen einem gleichen Parameter zugeordnet werden, bei der Qualitätsüberwachung berücksich-tigt werden. Bei einem solchen Verfahren soll das Messwertetoleranzband in Abhängigkeit von Abweichungen der weiteren Messwerte zu dem aus den vorausgegangenen Messwerten bestimmten Toleranzband für die weiteren Schweißungen in seiner Form oder in Bezug auf seine Ausrichtung zu einem Mittelwert verändert werden. Dieses Verfahren beschreibt allgemein die Verarbeitung von Messwerten aus dem Bereich des Ultraschallschweißens, die einem Fachmann geläufig sind. Hinweise auf die Gestaltung einer Vorrichtung zum kraftschlüssigen Verbinden von Glas und Aluminium sind dieser Druckschrift nicht zu entnehme.

Der vorliegenden Erfindung liegt deshalb die Aufgabe zugrunde, eine Vorrichtung und ein Verfahren zum kraftschlüssigen Verbinden von glasartigen Bauteilen mit Metallen, sowie ein Computerprogramm und einen maschinenlesbaren Träger zur Durchführung des Verfahrens anzugeben, womit der Prozess der kraftschlüssigen Verbindung von Glas und Metallen betriebssicher gestaltet und auch für ungeübte Personen leicht vollziehbar gemacht werden kann.

Diese Aufgabe wird hinsichtlich der Vorrichtung durch die Merkmale nach Anspruch 1, hinsichtlich des Verfahrens durch die Maßnahmen nach Anspruch 9, hinsichtlich des Computerprogramms durch die Merkmale nach Anspruch 12 und hinsichtlich des maschinenlesbaren Trägers durch die Merkmale nach Anspruch 13 gelöst.

In den Unteransprüchen sind weiter vorteilhafte Ausführungsbeispiele der Erfindung gekennzeichnet.

Die erfindungsgemäße Vorrichtung wird im Folgenden näher beschrieben. Es zeigen im Einzelnen:
- Fig.1 :: eine erste Form der erfindungsgemäßen Vorrichtung
- Fig:2:: eine zweite Form der erfindungsgemäßen Vorrichtung
- Fig. 3A:: ein Befestigungselement
- Fig. 3B:: ein Befestigungselement unter Belastung
- Fig.4:: eine Linie von Befestigungselementen
- Fig.5A:: einen besonderen Befestigungspunkt von oben

- Fig.5B:: einen besonderen Befestigungspunkt von der Seite

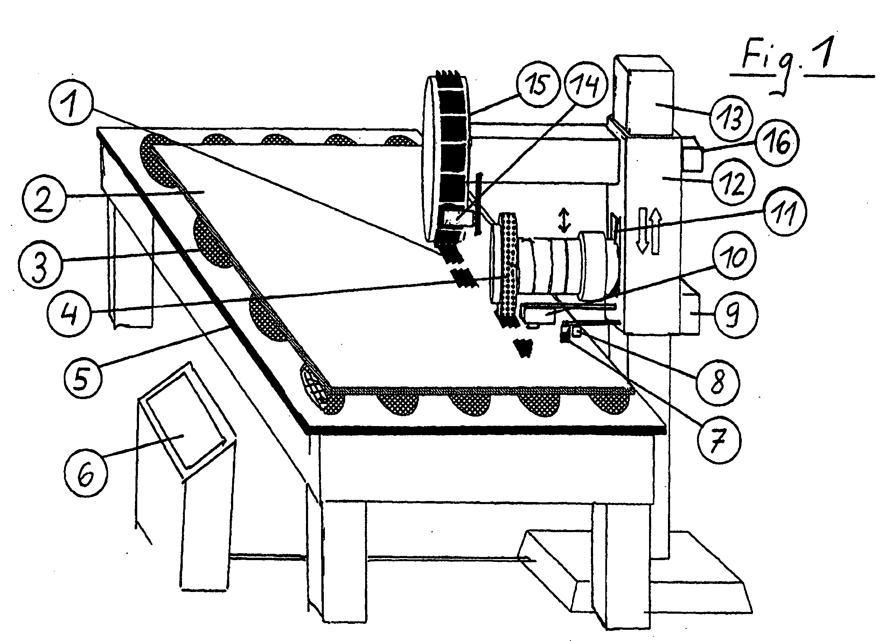

In der Fig.1 ist eine Vorrichtung dargestellt die eine fortlaufende Verbindung von Befestigungslaschen aus Metall auf einer Glasplatte mittels der Verschweißung durch Ultraschall ermöglicht. Eine solche Verbindungsart ist deswegen wirtschaftlich interessant, weil sie schneller und billiger ist als ein entsprechender Klebevorgang. Um über eine längere Strecke eine kraftschlüssige Verbindung einer Glasfläche mit einer Befestigung aus Metall zu erreichen ist zu berücksichtigen, dass Werkstoffe aus Glas und Werkstoffe aus Metall hinsichtlich ihres Verhaltens bei Wärmeeinwirkung unterschiedliche Ausdehnungskoeffizienten haben. Das bedeutet, dass eine durchgehende kraftschlüssige Verbindung einer ausgedehnten Metallfläche mit einer Glasfläche zu Spannungen in beiden Werkstoffen führt und damit die Bildung von Rissen provoziert. Um dem zu begegnen ist erfingdungsgemäß vorgesehen Verschweißungen einzelner Laschen aus Metall mit einer Glasplatte an einzelnen, vorzugsweise äquidistanten, Stellen vorzunehmen und diese Befestigungslaschen dann mit der jeweiligen, den eigentlichen Halt bietenden, Struktur zu verbinden. Diese, den eigentlichen Halt bietende Struktur kann hierbei aus Metall sein und die gebräuchlichen Mittel für Metallverbindungen bieten oder auch aus einem anderen Werkstoff bestehen.

Die jeweils anzubringenden Befestigungselemente 1 werden bei der Vorrichtung der Fig.1 einer zugehörigen Vorrats - und Positioniereinrichtung 15 entnommen die hier die Form eines aufgerollten bandartigen Magazins aufweist, das mittels eines Antriebs 16 nach Bedarf Befestigungselemente 1 bereitstellt. Die jeweils zum Einsatz kommende Art des Materials kann mittels eines Sensors 14 ermittelt werden. Diese Eingabe kann im Prinzip auch von Hand eingegeben werden, aber die Arbeit des Sensors 14 macht sich in der Form zusätzlicher Sicherheit bemerkbar wenn die Vorrats - und Positioniereinrichtung 15 mit Befestigungselementen 1 von unterschiedlichem Material bestückt ist. Da auch Befestigungselemente zum Einsatz kommen können die im Bereich der Verbindung mit der Glasplatte 2 mehrlagig ausgeführt sind, ist die richtige Unterscheidung der verschiedenen Arten von Befestigungselementen bedeutsam.

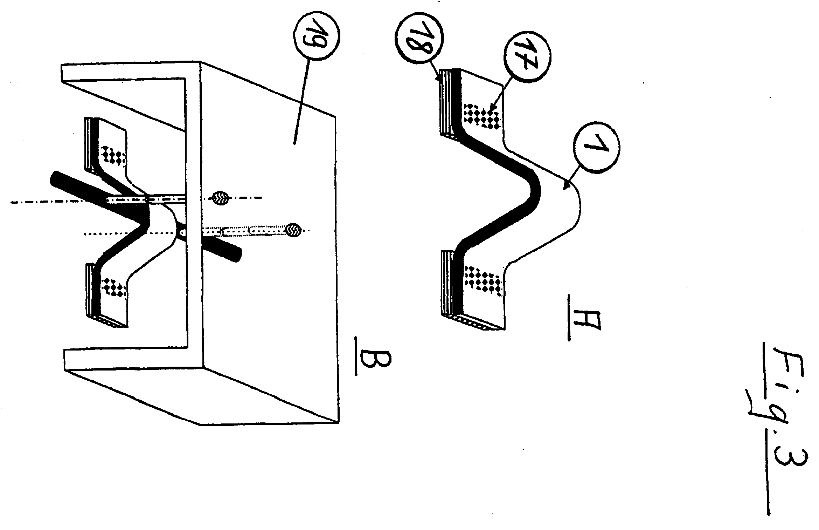

Denn zur Optimierung der Flächenhaftung und der Langzeitstabilität der Schweißverbindung sowie zum Anpassen der Materialeigenschaften der Befestigungselemente 1, z.B. der Elastizität, kann es vorteilhaft sein Kombinationen mehrerer Metalle, z.B. Aluminium und Stahl, in der Form mehrerer aufeinander gelegter Bleche, zu verwenden (vgl. Fig. 3A). Diese Lagen können durch einen Sputterprozess aufgetragen werden oder im Walzwerk plattiert werden.

Die Ausgestaltung der hierzu benötigten Vorrichtungen zum Ablösen eines Befestigungselements 1 von dem Magazinband und zum Aufsetzen eines Befestigungselements 1 auf die Glasplatte 2 sind dem Fachmann geläufig. Eine Verschiebe - Einrichtung 12 der Vorrats - und Positioniereinrichtung 15 verschiebt dabei die Einrichtung 15 entsprechend dem Füllungsgrad des Magazinbandes und dem sich dadurch verändernden Auflagewinkel der Befestigungselemente 1.

Die zu bestückende Glasplatte 2 ist mittels der Halte - und Fixiermittel 3 auf dem plattenförmigen Gegenlager 5 für die Sonotrode 4 und das jeweilige Befestigungselement 1 unverrückbar befestigt. Die Halte - und Fixiermittel 3 können entsprechend der zu erwartenden Belastung als Saugnäpfe zur Fixierung von unten oder auch als Niederhalter jeglicher Art zur Fixierung von oben ausgestaltet sein, oder beide Methoden gleichzeitig verwenden.

Die Sonotrode 4 wird über eine Verschiebe - Einrichtung 11 entsprechend der Anforderungen des Schweißvorganges vertikal in beiden Richtungen mittels des Verschiebe - Antriebs 9 bewegt, bzw. auf das jeweilige Werkstück gedrückt. Die Sonotrode 4 folgt dabei der Linie, die durch die Vorrats - und Positioniereinrichtung 15 der Befestigungselemente 1 vorgegeben ist. In der Darstellung der Fig.1 ist dieser Vorgang aus Gründen der besseren Erkennbarkeit verzerrt dargestellt, da hier die Linie der abgelegten, bzw. positionierten, Befestigungselemente 1 und die Linie der von der Sonotrode 4 erfassten und angeschweißten Befestigungselemente 1, die natürlich Teile einer gemeinsamen Linie sind, nicht fluchtend gezeichnet sind.

Die Verschiebe - Einrichtungen 11,12 sind in der Hauptsäule 13 untergebracht. Die Hauptsäule 13 ist in der Fig.1 auf dem Boden feststehend gezeichnet, sie kann natürlich auch bei Bedarf als Teil einer X - Y - Positionierung ausgeführt sein. Ebenso ist es für den Fachmann einsichtig, dass auch zusätzlich, oder als Ersatz, bei Bedarf die Führung der Vorrats - und Positioniereinrichtung 15 der Befestigungselemente 1 und die Führung der Sonotrode 4, unabhängig von der Verschiebe - Einrichtung 11, als Teil eines gesonderten X - Y - Positionierungssystems ausgeführt sein kann.

Die Eingabe - und Steuereinrichtung 6 ermöglicht sämtliche Befehlseingaben die für die Steuerung der erfindungsgemäßen Vorrichtung notwendig sind, an zentraler Stelle. Die für den Datenverkehr benötigten Ein - und Ausgabeeinheiten richten sich nach der Ausstattung der gesamten Vorrichtung und ihrer Komponenten. Sie entsprechen dem derzeitigen Stand der Technik und sind deshalb nicht näher beschrieben.

Die Messung der Dicke der Glasplatte 2 erfolgt mittels der Einrichtung 7, die Messung der zugehörigen Resonanzfrequenz der Glasplatte 2 geschieht mittels des Messgerätes 8 über einen entsprechend geführten Druckaufnehmer. Die Erfassung der Resonanzfrequenz der Glasplatte 2 kann dabei vor der Aktivierung der Halte - und Fixiermittel 3 und / oder danach erfolgen.

Es ist weiterhin vorteilhaft die Eigenschwingung der Glasplatte 2 während des Schweißprozesses zu messen und das Ergebnis dieses Messvorgangs als Rückkopplungsfaktor bei der Bestimmung der Betriebsparameter der Sonotrode zu berücksichtigen

Die entsprechende Vorgehensweise hängt dabei nicht nur von der Dicke und der Größe der jeweiligen Glasplatte oder glasähnlichen Platte 2, sondern auch vom Material, wie zum Beispiel Keramik oder Glas, ab. Auch die Dicke des jeweiligen Befestigungselements 1 und die Dicke seiner Oxidschicht spielen für den Prozess des Verschweißens eine Rolle. Beide Messwerte, die Dicke des Befestigungselements 1 und die Dicke seiner Oxidschicht können zusätzlich als Parameter bei der Steuerung des Schweißprozesses durch die Sonotrode 4 berücksichtigt werden. Ebenso kann die mittels des Sensors 10, der im Bereich eines Befestigungselements 1 installiert ist, ermittelte Rauhtiefe einer Glasplatte 2 bei der Steuerung des Schweißprozesses berücksichtigt werden. Als zu steuernde Betriebsparameter der Sonotrode kommen hierbei der Anpressdruck der Sonotrode, die Amplitude und die Schwingungsfrequenz der Sonotrode, evtl. deren Vorschubgeschwindigkeit und die Art des Betriebs, zum Beispiel alle Arten von Impulsbetrieb, infrage.

Idealerweise werden alle diese Parameter in Verbindung mit, in Vorversuchen ermittelten, Erfahrungswerten für ein optimales Schweißergebnis berücksichtigt. Dem Fachmann ist geläufig für die Kombination der verschiedensten für eine Verschweißung infrage kommenden Materialien in Vorversuchen entsprechende Kennlinien zu ermitteln und als Teil einer Grundprogrammierung dem Anwender zur Verfügung zu stellen. Über eine zusätzliche Möglichkeit der Abfrage an der Eingabe - und Steuereinrichtung 6 bezüglich der Güte des jeweils erzielten Schweißergebnisses wird die Möglichkeit eines, die weiteren Schweißungen positiv beeinflussenden, Lernprogramms geschaffen.

Um das Verbinden beim Ultraschallschweißen zu erleichtern ist zum Beispiel das vorherige Beschichten der Glasoberfläche mit einer Metallschicht oder das Einwirken auf deren Rauhtiefe mittels des Einflusses von Flüssigkeiten oder Gasen zu nennen. Auch auf die Befestigungselemente 1 kann zur Kontrolle der beim Verbinden wichtigen Oxidschicht mittels Flüssigkeiten und Gasen eingewirkt werden.

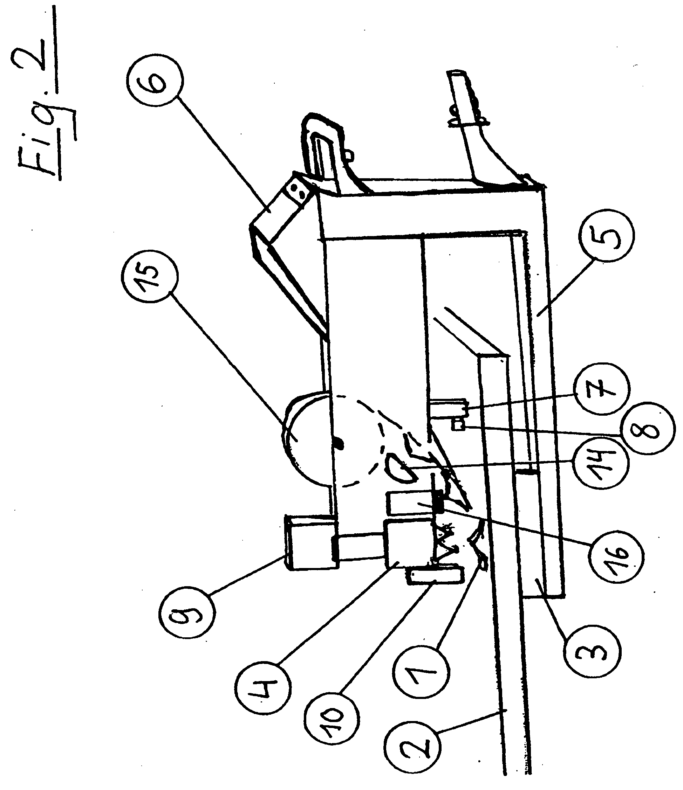

Die Fig.2 zeigt eine zweite Form der erfindungsgemäßen Vorrichtung, die sich bevorzugt für die Anwendung im mobilen Einsatz eignet.

Die Glasplatte 2 ist hier auf einer relativ kleinen Fläche von den Halte - und Fixiermitteln 3 unterstützt. Im mobilen Bereich können Glasplatten 2 zum Beispiel im Bereich großer photovoltaischer Anlagen und / oder beim Hochbau mit entsprechenden angepassten Halterungen versehen werden. Eine kleinere Auflagefläche erscheint in diese Fällen ausreichend, da die Glasplatte 2 bei Bedarf auch noch zusätzlich auf einem Arbeitstisch aufgelegt werden kann. Das zangenähnliche Schweißgerät wird in der Fig. 2 mit den beiden auf der rechten Seite dargestellten Haltegriffen vom Bediener gehalten. Der untere Teil dieser zangenähnlichen Bauform trägt das Halte - und Fixiermittel 3 und wirkt als Gegenlager 5. Ein winkelförmiges Befestigungselement 1 ist hier in der Fig.2 im Schnitt dargestellt. Die Sonotrode 4 mit ihrem Verschiebe - Antrieb 9 ist direkt über dem Befestigungselement 1 zu erkennen, wobei die Sonotrode 4 entsprechend der Winkelform des gezeigten Befestigungselements 1 zwei, auf die beiden Seitenflächen des Befestigungselements 1 gerichtete Energie - Übertragungsköpfe aufweist. Der Oberflächensensor 10 ist, aus dieser Sicht nicht erkennbar, auf die Glasplatte 2 gerichtet. Auf dem Rücken der gezeigten mobilen Schweißvorrichtung ist die Vorrats - und Positionierungseinrichtung 15 der Befestigungselemente 1 mit dem Sensor 14 zur Detektierung des jeweiligen Materials des aufzuschweißenden Befestigungselements 1 angebracht. Der Antrieb 16 der Vorrichtung 15 ist bei dieser Bauform zwangsweise räumlich anders angeordnet und aus Platzgründen etwas stilisiert dargestellt. Die Dickenmesseinrichtung 7 für die Glasplatte 2 und das Messgerät 8 zur Messung ihrer Resonanzfrequenz sind auch hier nahe beieinander im Bereich der Unterseite des oberen Zangenteils angeordnet. Die weiteren, bei der Vorrichtung nach Fig.1 beschriebenen Messmöglichkeiten können jeweils entsprechend der jeweiligen Anforderung miniaturisiert zugefügt werden.

Die Eingabe - und Steuereinheit 6 ist, leicht zugänglich im Bereich der beiden Handgriffe im Querschnitt dargestellt.

In der Fig.3A ist ein winkelförmiges Befestigungselement 1 mit zwei Befestigungspunkten dargestellt. Mit 17 ist hierbei jeweils eine Schweißstelle bezeichnet. Das Verbindungsmaterial 18 kann hierbei zum Beispiel aus einer Kombination von Aluminium und Stahl bestehen (vgl. hierzu auch Beschreibung zur Fig.1).

In der Fig.3B ist ein Befestigungselement unter Belastung dargestellt. Die Belastung besteht hierbei zum Beispiel aus einem unter das Befestigungselement geschobenen zentralen Verbindungselement 20 in der Form einer biegesteifen Stange die mittels zweier in sie eingeschraubter Schrauben das zentrale Verbindungselement nach oben zieht, wobei sich die beiden Schrauben über das u - förmige Trägerfitting 19 auf der Glasplatte 2 abstützen und somit das Trägerfitting 19 mit der Glasplatte 2 kraftschlüssig verbinden.

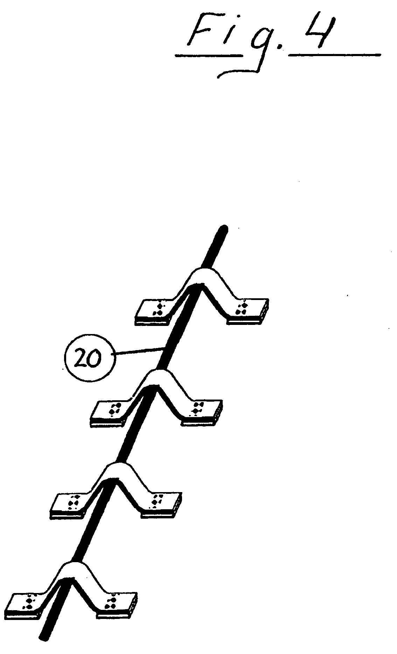

Die Fig.4 zeigt eine Linie von Befestigungselementen 1 bei denen ein zentrales Verbindungselement 20 als Basis für eine kraftschlüssige Verbindung eines länger ausgeformten Trägerfittings 19, wie in der Fig.3A im Detail gezeigt, dienen kann.

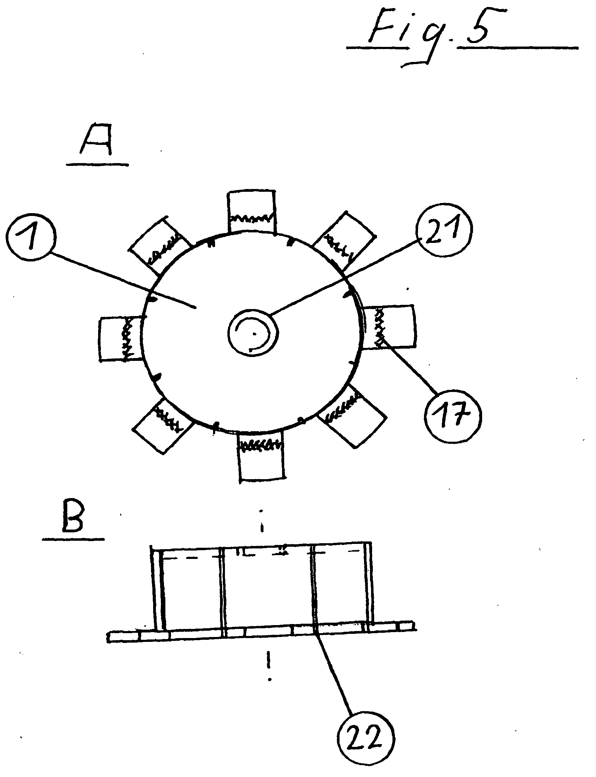

In der Fig.5A ist ein besonderer Befestigungspunkt von oben dargestellt. Mit ihm besteht die Möglichkeit eine zentrale Befestigungsstelle 21 von besonderer Zugfestigkeit und Querstabilität zu schaffen. Wie aus der Fig. 5B im Schnitt zu erkennen ist, handelt es sich hierbei um ein kreisförmiges Befestigungselement 1 das mittels acht an seinem Umfang verteilter Schweißlaschen mit einer Glasplatte verschweißt werden kann. Der Dehnungsspalt 22 gleicht Spannungen zwischen den verschiedenen Befestigungslaschen aus.

Die komplexe Steuerung der beschriebenen Messverfahren und Bewegungsabläufe beim Schweißverfahren erfordert ein spezielles Steuerprogramm.

### Bezugszeichenliste

- (1): Befestigungselemente
- (2): Glasplatte
- (3): Halte - und Fixiermittel
- (4): Sonotrode
- (5): Gegenlager (Arbeitstisch)
- (6): Eingabe - und Steuereinrichtung
- (7): Dickenmesseinrichtung (z.B. Glas)
- (8): Messgerät der Resonanzfrequenz
- (9): Verschiebe - Antrieb der Sonotrode 4
- (10): Oberflächensensor (z.B. Rautiefe von Glas)
- (11): Verschiebe - Einrichtung der Sonotrode 4
- (12): Verschiebe - Einrichtung der Vorrats - und Positioniereinrichtung 15
- (13): Hauptsäule
- (14): Sensor zur Detektierung des Materials der Befestigungselemente
- (15): Vorrats - und Positioniereinrichtung der Befestigungselemente
- (16): Antrieb der Vorrats - und Positioniereinrichtung 15
- (17): Ultraschall - Schweißstelle
- (18): Verbindungsmaterial
- (19): Trägerfitting (großflächige Halterung)
- (20): zentrales Verbindungselement
- (21): besondere zentrale Befestigungsstelle
- (22): Dehnungsspalt

## Patentansprüche

1. Vorrichtung zum kraftschlüssigen Verbinden von glasartigen Bauteilen mit Metallen, insbesondere zum Verbinden einer Glasplatte (2) mit einer großflächigen Halterung (19) als zentralem Verbindungselement, insbesondere aus Metall,
mit den folgenden Merkmalen:
a) einer Eingabe- und Steuerungseinrichtung (6) zur Eingabe von Prozessdaten,
b) einer Vorrats- und Positioniereinrichtung (15) zur Lieferung von einzelnen Befestigungselementen (1) als Stützelemente eines zentralen Verbindungselements (20),
c) mit Halte- und Fixiermitteln (3) zur Fixierung der Glasplatte (2),
d) einer Dickenmesseinrichtung (7) zur Messung der Dicke der jeweiligen zu verbindenden Bauteile und von Oxid-Schichten,
e) einem Messgerät (8) zur Messung der Resonanzfrequenz der Glasplatte (2) und einen Oberflächensensor (10) zur Ermittlung der Rauhtiefe der Glasplatte (2),
f) einer Verschiebe-Einrichtung (11) zum Zusammenpressen der zu verbindenden Bauteile zwischen einer Sonotrode (4) und einem Gegenlager (5),
g) einer Vorrichtung zur Erzeugung von Ultraschall mittels einer Sonotrode (4).

2. Vorrichtung nach Anspruch 1,
**dadurch gekennzeichnet,**
**dass** die Befestigungselemente (1) aus ReinAluminium sind oder bezüglich der zu verbindenden Flächen aus Schichten unterschiedlicher Verbindungsmaterialien (18) bestehen.

3. Vorrichtung nach einem der vorhergehenden Ansprüche,
**dadurch gekennzeichnet,**
**dass** die Halte- und Fixiermitteln (3) aus Saugnäpfen und/oder aus Niederhaltern bestehen.

4. Vorrichtung nach einem der vorhergehenden Ansprüche,
**dadurch gekennzeichnet,**
**dass** mittels eines Sensors (14) die Art des Materials der Befestigungselemente (1) detektiert wird und der Vorgang der Verbindung mittels einer Kamera überwacht wird.

5. Vorrichtung nach einem der vorhergehenden Ansprüche,
**dadurch gekennzeichnet,**
**dass** ein Tragfitting (19) mittels eines zentralen Verbindungselements (20) an einer Mehrzahl von Befestigungselementen befestigt ist.

6. Vorrichtung nach einem der vorhergehenden Ansprüche,
**dadurch gekennzeichnet,**
**dass** im Bereich der Sonotrode (4) zusätzlich ein Generator zur Erzeugung elektromagnetischer Wellen installiert ist.

7. Vorrichtung nach einem der vorhergehenden Ansprüche,
**dadurch gekennzeichnet,**
**dass** mehrere Sonotroden (4) kreisförmig oder in der Form eines Rechtecks angeordnet sind, wobei eine oder mehrere dieser Sonotroden im Impulsbetrieb betrieben werden können.

8. Vorrichtung nach einem der vorhergehenden Ansprüche,
**dadurch gekennzeichnet,**
**dass** sie zum Zwecke des mobilen Betriebs zangenförmig ausgestaltet ist und ein oder mehrere Handgriffe aufweist.

9. Verfahren zum kraftschlüssigen Verbinden von glasartigen Bauteilen mit Metallen, insbesondere zum Verbinden einer Glasplatte (2) mit einer großflächigen Halterung (19) als zentralem Verbindungselement, insbesondere aus Metall, mit einer Vorrichtung gemäß einem der Ansprüche 1 bis 8,
mit den folgenden Merkmalen:
a) in einer Eingabe- und Steuereinheit (6) werden die Daten bezüglich der Art der zu verbindenden Bauteile und der gewünschten Maßnahmen zur Verbindung dieser Bauteile eingegeben,
b) eine Vorrats- und Positioniereinrichtung (15) wird mit den gewünschten Stützelementen (1) bestückt,
c) eine Grundplatte, z.B. eine Glasplatte (2), wird mittels der Halte- und Fixiermitteln (3) auf dem Gegenlager (5) fixiert,
d) dann werden die Resonanzfrequenz und/oder die Rauhtiefe der Glasplatte (2) und die Dicke der jeweiligen Befestigungselemente (1) und/oder deren Oxidschichten mittels entsprechender Messeinrichtungen (7, 8, 10) ermittelt und an die Prozesssteuerung weitergegeben,
e) aus diesen Daten, sowie aus Erfahrungswerten, bestimmt die Prozesssteuerung die Betriebsdaten der Sonotrode und zusätzlicher prozessfördernder Maßnahmen,
f) der Verbindungsprozess wird durch die Eingabe- und Steuereinrichtung (6) oder automatisch gestartet und bis zur Befestigung des letzten geplanten Befestigungselements fortgesetzt,
g) die einzelnen Befestigungselemente (1) werden mechanisch mit einer gewünschten großflächigen Halterung verbunden.

10. Verfahren nach Anspruch 9,
**dadurch gekennzeichnet,**
**dass** der Schweißvorgang mittels der Sonotrode (4) durch die Zufuhr elektromagnetischer Energie unterstützt wird.

11. Verfahren nach einem der Ansprüche 9 oder 10,
**dadurch gekennzeichnet,**
**dass** es zum Zwecke des mobilen Betriebs ausgestaltet werden kann.

12. Computerprogramm mit einem Programmcode zur Durchführung der Verfahrensschritte nach einem der Ansprüche 9 bis 11, wenn das Programm in einem Computer ausgeführt wird.

13. Maschinenlesbarer Träger mit dem Programmcode eines Computerprogramms zur Durchführung des Verfahrens nach einem der Ansprüche 9 bis 11, wenn das Programm in einem Computer ausgeführt wird.

## Claims

1. Apparatus for the force-fitting connection of glass-like components to metals, in particular for the connection of a glass sheet (2) to a large-scale mounting element (19) as a central connection element, in particular made of metal,
having the following features:
a) an input and control device (6) for inputting process data,
b) a storage and positioning device (15) for supplying individual fastening elements (1) as support elements of a central connection element (20),
c) having mounting and fixing means (3) for fixing the glass sheet (2),
d) a thickness measuring device (7) for measuring the thickness of each of the components to be connected and of oxide layers,
e) a measuring appliance (8) for measuring the resonant frequency of the glass sheet (2) and a surface sensor (10) for determining the roughness depth of the glass sheet (2),
f) a displacement device (11) for pressing the components to be connected together between a sonotrode (4) and an abutment (5),
g) an apparatus for generating ultrasound by means of a sonotrode (4).

2. Apparatus according to Claim 1,
**characterized**
**in that** the fastening elements (1) are made of pure aluminum or, with respect to the surfaces to be connected, consist of layers of different connection materials (18).

3. Apparatus according to either of the preceding claims,
**characterized**
**in that** the mounting and fixing means (3) consist of suckers and/or of holding-down devices.

4. Apparatus according to one of the preceding claims,
**characterized**
**in that** a sensor (14) is used to detect the type of material of the fastening elements (1), and the connection operation is monitored by means of a camera.

5. Apparatus according to one of the preceding claims,
**characterized**
**in that** a support fitting (19) is fastened to a plurality of fastening elements by means of a central connection element (20).

6. Apparatus according to one of the preceding claims,
**characterized**
**in that** a generator for generating electromagnetic waves is additionally installed in the region of the sonotrode (4).

7. Apparatus according to one of the preceding claims,
**characterized**
**in that** a plurality of sonotrodes (4) are arranged in a circle or in the form of a rectangle, wherein one or more of these sonotrodes can be operated in pulsed mode.

8. Apparatus according to one of the preceding claims,
**characterized**
**in that** said apparatus has a tongs-like configuration for the purpose of mobile operation and has one handle or a plurality of handles.

9. Method for the force-fitting connection of glass-like components to metals, in particular for the connection of a glass sheet (2) to a large-scale mounting element (19) as a central connection element, in particular made of metal, using an apparatus according to one of Claims 1 to 8,
having the following features:
a) the data relating to the type of components to be connected and the desired measures for the connection of said components are input in an input and control unit (6),
b) a storage and positioning device (15) is equipped with the desired support elements (1),
c) a base sheet, e.g. a glass sheet (2), is fixed on the abutment (5) by means of the mounting and fixing means (3),
d) then, the resonant frequency and/or the roughness depth of the glass sheet (2) and the thickness of each of the fastening elements (1) and/or the oxide layers thereof are determined by means of appropriate measuring devices (7, 8, 10) and forwarded to the process control,
e) from these data, and from empirical values, the process control determines the operational data of the sonotrode and additional measures which assist the process,
f) the connection process is started by the input and control device (6) or automatically and continued until the last planned fastening element has been fastened,
g) the individual fastening elements (1) are mechanically connected to a desired large-scale mounting element.

10. Method according to Claim 9,
**characterized**
**in that** the welding operation is assisted by means of the sonotrode (4) by the supply of electromagnetic energy.

11. Method according to either of Claims 9 and 10,
**characterized**
**in that** said method can be configured for the purpose of mobile operation.

12. Computer program with a program code for carrying out the method steps according to one of Claims 9 to 11, if the program is executed on a computer.

13. Machine-readable storage medium with the program code of a computer program for carrying out the method according to one of Claims 9 to 11, if the program is executed on a computer.

## Revendications

1. Dispositif pour assembler à force des composants vitreux et des métaux, en particulier pour assembler une plaque de verre (2) et une fixation à grande surface (19) en tant qu'élément d'assemblage central, en particulier en métal,
comprenant les caractéristiques suivantes :
a) un dispositif de saisie et de commande (6) pour saisir des données de procédé,
b) un dispositif de stockage et de positionnement (15) pour fournir des éléments de fixation individuels (1) en tant qu'éléments de support d'un élément d'assemblage central (20),
c) avec des moyens de retenue et de fixation (3) pour fixer la plaque de verre (2),
d) un dispositif de mesure de l'épaisseur (7) pour mesurer l'épaisseur des composants respectifs à assembler et de couches d'oxyde,
e) un appareil de mesure (8) pour mesurer la fréquence de résonance de la vitre de verre (2) et un capteur de surface (10) pour calculer la profondeur de rugosité de la plaque de verre (2),
f) un dispositif de déplacement (11) pour la compression des composants à assembler entre une sonotrode (4) et un palier-support (5),
g) un dispositif pour produire des ultrasons au moyen d'une sonotrode (4).

2. Dispositif selon la revendication 1, **caractérisé en ce que**
les éléments de fixation (1) sont en aluminium pur ou sont composés de couches de différents matériaux d'assemblage (18) en fonction des surfaces à assembler.

3. Dispositif selon l'une des revendications précédentes, **caractérisé en ce que** les moyens de retenue et de fixation (3) sont composés de ventouses et/ou de serre-flans.

4. Dispositif selon l'une des revendications précédentes, **caractérisé en ce que** le type de matériau des éléments de fixation (1) est détecté au moyen d'un capteur (14) et l'opération d'assemblage est surveillée au moyen d'une caméra.

5. Dispositif selon l'une des revendications précédentes, **caractérisé en ce qu'**un raccord porteur (19) est fixé sur une pluralité d'éléments de fixation au moyen d'un élément d'assemblage central (20).

6. Dispositif selon l'une des revendications précédentes, **caractérisé en ce qu'**un générateur est installé en plus au niveau de la sonotrode (4) pour produire des ondes électromagnétiques.

7. Dispositif selon l'une des revendications précédentes, **caractérisé en ce que** plusieurs sonotrodes (4) sont disposées en cercle ou sous forme d'un rectangle, une ou plusieurs de ces sonotrodes pouvant être utilisées en mode impulsions.

8. Dispositif selon l'une des revendications précédentes, **caractérisé en ce qu'**il est conçu en forme de pince pour l'utilisation mobile et présente une ou plusieurs poignées.

9. Procédé pour assembler à force des composants vitreux et des métaux, en particulier pour assembler une plaque de verre (2) et une fixation à grande surface (19) en tant qu'élément d'assemblage central, en particulier en métal, avec un dispositif selon l'une des revendications 1 à 8, comprenant les caractéristiques suivantes :
a) les données relatives au type des composants à assembler et aux mesures souhaitées pour l'assemblage de ces composants sont saisies dans un dispositif de saisie et de commande (6),
b) un dispositif de stockage et de positionnement (15) est doté des éléments de support (1) souhaités,
c) une plaque de base, par ex. une plaque de verre (2), est fixée sur le palier-support (5) par les moyens de retenue et de fixation (3),
d) puis la fréquence de résonance et/ou la profondeur de rugosité de la plaque de verre (2) et l'épaisseur des éléments de fixation (1) respectifs et/ou de leurs couches d'oxyde sont calculées au moyen de dispositifs de mesure correspondants (7, 8, 10) et transmises à la commande de procédé,
e) à partir de ces données, ainsi qu'à partir de valeurs empiriques, la commande de procédé définit les données d'utilisation de la sonotrode et de mesures supplémentaires favorisant le procédé,
f) le procédé d'assemblage est lancé par le dispositif de saisie et de commande (6) ou bien automatiquement et est poursuivi jusqu'à fixation du dernier élément de fixation prévu,
g) les différents éléments de fixation (1) sont reliés mécaniquement à une fixation de grande surface souhaitée.

10. Procédé selon la revendication 9, **caractérisé en ce que** le procédé de soudage au moyen de la sonotrode (4) est supporté par l'apport d'énergie électromagnétique.

11. Procédé selon l'une des revendications 9 ou 10, **caractérisé en ce qu'**il peut être conçu pour l'utilisation mobile.

12. Programme informatique avec un code de programme pour exécuter les étapes de procédé selon l'une des revendications 9 à 11, lorsque le programme est exécuté sur un ordinateur.

13. Support pouvant être lu par une machine avec le code de programme d'un programme informatique pour exécuter le procédé selon l'une des revendications 9 à 11, lorsque le programme est exécuté sur un ordinateur.
